(19) Europäisches Patentamt

European Patent Office

Office européen des brevets

(11)  EP 2 595 920 B1

(12)  FASCICULE DE BREVET EUROPEEN

(45) Date de publication et mention
de la délivrance du brevet:
**29.04.2020  Bulletin 2020/18**

(21) Numéro de dépôt: **11746200.2**

(22) Date de dépôt: **25.07.2011**

(51) Int Cl.:
***C01B 33/193*** *(2006.01)*

(86) Numéro de dépôt international:
**PCT/EP2011/062734**

(87) Numéro de publication internationale:
**WO 2012/010712 (26.01.2012 Gazette 2012/04)**

(54)  **PROCÉDÉ DE PRÉPARATION DE SILICES PRÉCIPITÉES**

VERFAHREN ZUR HERSTELLUNG VON FÄLLUNGSKIESELSÄURE

PRECIPITATED SILICA PRODUCTION PROCESS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.07.2010  FR 1003098**

(43) Date de publication de la demande:
**29.05.2013  Bulletin 2013/22**

(73) Titulaire: **Rhodia Operations
93306 Aubervilliers (FR)**

(72) Inventeurs:
• **CLOUIN, Malika**
**F-75012 Paris (FR)**
• **NEVEU, Sylvaine**
**F-75005 Paris (FR)**
• **RACINOUX, Joël**
**F-69270 Rochetaillée-sur-Saône (FR)**

(74) Mandataire: **Delenne, Marc
Rhodia Services
Direction de la Propriété Industrielle
40, rue de la Haie-Coq
93306 Aubervilliers Cedex (FR)**

(56) Documents cités:
**EP-A1- 0 396 450      EP-A1- 0 754 650
EP-A2- 0 341 383      EP-B1- 0 520 862
WO-A1-95/09127      WO-A1-2010/022544
FR-A- 1 078 134**

**Description**

La présente invention concerne un nouveau procédé de préparation de silice précipitée.

Il est connu d'employer des silices précipitées comme support de catalyseur, comme absorbant de matières actives (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), naturel(s) ou synthétique(s), en particulier d'élastomère(s), notamment diéniques, par exemple pour les pneumatiques, les semelles de chaussure, les revêtements de sols, les barrières aux gaz, les matériaux ignifugeants et également les pièces techniques telles que les galets de téléphériques, les joints d'appareils électroménagers, les joints de conduite de liquides ou de gaz, les joints de système de greinage, les gaines, les cables et les courroies de transmissions.

Il est ainsi connu de préparer par certains procédés, mettant en œuvre une réaction de précipitation entre un silicate et un acide dilué, des silices précipitées ayant une bonne aptitude à la dispersion (dispersibilité) dans les compositions de polymères (élastomères) et de bonnes propriétés renforçantes, permettant de procurer aux dites compositions dans lesquelles elles sont incorporées un compromis de propriétés très satisfaisant, en particulier au niveau de leurs propriétés mécaniques, rhéologiques et/ou dynamiques. Un exemple d'un tel procédé et de telles silices est fourni par EP520862B1.

WO2010/022544A1 décrit un procédé de préparation de silices précipitées dans lequel l'acide utilisé dans la réaction de précipitation est choisi dans le groupe constitué de l'acide sulfurique à hauteur de 90 à 98,5 % en poids, de l'acide chlorhydrique à hauteur de 34 à 42,7 % en poids, de l'acide nitrique à hauteur de 60 à 68 % en poids, de l'acide phosphorique à hauteur de 80 à 100 % en poids, de l'acide carbonique ou du $CO_2$ et du bisulfite de sodium ou du $SO_2$.

Le but principal de la présente invention est de proposer un nouveau procédé de préparation de silice précipitée, utilisable comme charge renforçante dans les compositions de polymère(s) (élastomère(s)), qui constitue une alternative à ces procédés connus de préparation de silice précipitée.

Plus préférentiellement, l'un des buts de la présente invention consiste à fournir un procédé qui, tout en ayant une productivité améliorée en particulier au niveau de la réaction de précipitation, notamment par rapport à ces procédés de préparation de l'état de la technique mettant en œuvre à titre d'acide un acide dilué, permet d'obtenir des silices précipitées ayant des caractéristiques physico-chimiques et des propriétés similaires, notamment au niveau de leur distribution poreuse, de leur aptitude à la désagglomération et à la dispersion (dispersibilité) dans les compositions de polymère(s) (élastomère(s)) et/ou de leurs propriétés renforçantes, à celles des silices précipitées obtenues par ces procédés de préparation de l'état de la technique.

Un autre but de l'invention consiste préférentiellement, dans le même temps, à réduire la quantité d'énergie consommée et/ou la quantité d'eau employée lors de la préparation de silice précipitée, notamment par rapport à ces procédés de l'état de la technique.

Notamment dans ces buts, l'objet de l'invention est un nouveau procédé de préparation de silice précipitée, ayant de préférence une bonne aptitude à la dispersion (dispersibilité) dans les compositions de polymères (élastomères) et de bonnes propriétés renforçantes, comprenant la réaction de précipitation entre un silicate et au moins un acide ce par quoi l'on obtient une suspension de silice précipitée, puis la séparation et le séchage de cette suspension, dans lequel :

-   on réalise la réaction de précipitation selon les étapes successives suivantes :

    (i) on forme un pied de cuve initial comportant un silicate et un électrolyte, la concentration en silicate (exprimée en $SiO_2$) dans ledit pied de cuve initial étant (supérieure à 0 g/L et) inférieure à 100 g/L et, de préférence, la concentration en électrolyte dans ledit pied de cuve initial étant (supérieure à 0 g/L et) inférieure à 19 g/L, en particulier inférieure à 18 g/L, notamment inférieure à 17 g/L, par exemple inférieure à 15 g/L (tout en étant le plus souvent supérieure à 6 g/L),
    (ii) on ajoute un acide audit pied de cuve jusqu'à l'obtention d'une valeur du pH du milieu réactionnel d'au moins 7, en particulier comprise entre 7 et 8,5,
    (iii) on ajoute au milieu réactionnel, simultanément, un acide et un silicate,
    (iv) on ajoute au milieu réactionnel un acide, en particulier jusqu'à l'obtention d'une valeur du pH du milieu réactionnel comprise entre 3,0 et 6,5, notamment entre 4,0 et 5,5,

-   on sèche une suspension, de préférence présentant un taux de matière sèche d'au plus 24 % en masse,

procédé dans lequel l'acide utilisé dans les étapes (iii) et (iv) est un acide concentré, de manière avantageuse de l'acide sulfurique concentré, c'est-à-dire de l'acide sulfurique présentant une concentration d'au moins 80 % en masse, de préférence d'au moins 90 % en masse, et dans lequel l'acide utilisé après l'atteinte du point de gel dans le milieu réactionnel dans l'étape (ii) est un acide concentré.

Ainsi, selon l'une des caractéristiques essentielles de l'invention, prise en combinaison avec un enchaînement d'étapes aux conditions spécifiques, en particulier une certaine concentration en silicate et en électrolyte dans le pied de cuve initial ainsi que, de préférence, un taux approprié de matière sèche de la suspension à sécher, l'acide utilisé dans la totalité de l'étape (iii) est un acide concentré, de manière avantageuse de l'acide sulfurique concentré, c'est-à-dire de l'acide sulfurique présentant une concentration d'au moins 80 % en masse (et en général d'au plus 98 % en masse), de préférence d'au moins 90 % en masse ; en particulier, sa concentration est comprise entre 90 et 98 % en masse, par exemple entre 91 et 97 % en masse.

L'acide utilisé dans une partie de l'étape (ii) peut alors être par exemple un acide dilué, de manière avantageuse de l'acide sulfurique dilué, c'est-à-dire présentant une concentration très inférieure à 80 % en masse, en l'occurrence une concentration inférieure à 20 % en masse (et en général d'au moins 4 %), en particulier inférieure à 14 % en masse, notamment d'au plus 10% en masse, par exemple comprise entre 5 et 10 % en masse.

Dans une partie de l'étape (ii), en général dans une deuxième et dernière partie de cette étape (ii), l'acide utilisé est également un acide concentré tel que mentionné ci-dessus (l'acide utilisé dans l'autre partie de l'étape (ii) étant par exemple un acide dilué comme décrit ci-dessus). Ainsi, dans cette étape (ii) l'acide employé jusqu'à ce qu'on atteigne le point de gel dans le milieu réactionnel (correspondant à une brusque augmentation de la turbidité du milieu réactionnel caractéristique d'une augmentation de taille des objets) est un acide dilué tel que mentionné ci-dessus, de manière avantageuse de l'acide sulfurique dilué (c'est-à-dire présentant une concentration très inférieure à 80 % en masse, en l'occurrence une concentration inférieure à 20 % en masse, en général inférieure à 14 % en masse, en particulier d'au plus 10 % en masse, par exemple comprise entre 5 et 10 % en masse) et l'acide employé après atteinte du point de gel dans le milieu réactionnel peut être un acide concentré tel que mentionné ci-dessus, de manière avantageuse de l'acide sulfurique concentré, c'est-à-dire de l'acide sulfurique présentant une concentration d'au moins 80 % en masse, de préférence d'au moins 90 % en masse, en particulier comprise entre 90 et 98 % en masse. De même, dans cette étape (ii), l'acide employé dans les x premières minutes de l'étape (ii), avec x compris entre 15 et 25, par exemple égal à 20, peut être un acide dilué tel que mentionné ci-dessus et l'acide employé après les x premières minutes de l'étape (ii), avec x compris entre 15 et 25, par exemple égal à 20, peut être un acide concentré tel que mentionné ci-dessus.

L'acide utilisé dans la totalité de l'étape (ii) peut également être un acide concentré tel que mentionné ci-dessus, c'est-à-dire présentant une concentration d'au moins 80 % en masse, de préférence d'au moins 90 % en masse, en particulier comprise entre 90 et 98 % en masse. Dans le cas de cette utilisation, on peut éventuellement ajouter de l'eau dans le pied de cuve initial, en particulier soit avant l'étape (ii) soit au cours de l'étape (ii).

De préférence, dans le procédé selon l'invention, la concentration en silicate (exprimée en $SiO_2$) dans le pied de cuve initial, qui est inférieure à 100 g/L, peut être d'au moins 80 g/L. Il peut notamment en être ainsi dans le cadre de la variante très préférée de l'invention décrite ci-dessus (acide concentré utilisé dans l'ensemble des étapes (iii) et (iv)) lorsqu'une partie de l'étape (ii) n'est pas effectuée avec de l'acide concentré.

Même si ce n'est pas nécessairement une mise en œuvre préférée du procédé de l'invention, la concentration en silicate (exprimée en $SiO_2$) dans le pied de cuve initial, peut être inférieure à 80 g/L. Il peut notamment en être ainsi dans le cadre de la variante très préférée de l'invention décrite ci-dessus (acide concentré utilisé dans l'ensemble des étapes (iii) et (iv)) lorsque la totalité de l'étape (ii) est effectuée avec de l'acide concentré.

Dans le procédé selon l'invention on utilise généralement comme acide(s) (acide concentré ou acide dilué) un acide organique, tel que l'acide acétique, l'acide formique ou l'acide carbonique, ou, de préférence, un acide minéral, tel que l'acide sulfurique, l'acide nitrique, l'acide phosphorique ou l'acide chlorhydrique.

Si on utilise comme acide concentré de l'acide acétique concentré ou de l'acide formique concentré, alors leur concentration est d'au moins 90 % en masse.

Si on utilise comme acide concentré de l'acide nitrique concentré, alors sa concentration est d'au moins 60 % en masse.

Si on utilise comme acide concentré de l'acide phosphorique concentré, alors sa concentration est d'au moins 75 % en masse.

Si on utilise comme acide concentré de l'acide chlorhydrique concentré, alors sa concentration est d'au moins 30 % en masse.

Cependant, de manière très avantageuse, on emploie comme acide(s) un (des) acide(s) sulfurique(s), l'acide sulfurique concentré alors utilisé présentant une concentration telle que déjà mentionnée dans l'exposé ci-dessus.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration (exprimée en $SiO_2$) comprise entre 40 et 330 g/L, par exemple entre 60 et 300 g/L.

De manière préférée, on emploie, comme silicate, le silicate de sodium.

Dans le cas où l'on utilise le silicate de sodium, celui-ci présente, en général, un rapport pondéral $SiO_2/Na_2O$

compris entre 2 et 4, en particulier entre 2,4 et 3,9, par exemple entre 3,1 et 3,8.

En ce qui concerne l'électrolyte contenu dans le pied de cuve initial (étape (i)), ce terme s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'acide, par exemple le chlorure de sodium dans le cas de la réaction d'un silicate de sodium avec de l'acide chlorhydrique ou, de préférence, le sulfate de sodium dans le cas de la réaction d'un silicate de sodium avec de l'acide sulfurique.

L'addition d'acide dans l'étape (ii) entraîne une baisse corrélative du pH du milieu réactionnel et se fait jusqu'à ce qu'on atteigne une valeur du pH du milieu réactionnel d'au moins 7, en particulier comprise entre 7 et 8,5, par exemple comprise entre 7,5 et 8,5.

Une fois qu'est atteinte la valeur souhaitée de pH, on procède alors à l'addition simultanée de l'étape (iii).

Cette addition simultanée est généralement réalisée de manière telle que la valeur du pH du milieu réactionnel soit constamment égale (à +/- 0,1 près) à celle atteinte à l'issue de l'étape (ii).

Il peut être procédé à l'issue de l'étape (iv) à un mûrissement du milieu réactionnel (suspension aqueuse) obtenu, au pH obtenu à l'issue de l'étape (iv), et en général sous agitation, par exemple pendant 2 à 45 minutes, en particulier pendant 3 à 30 minutes.

Les étapes (i) à (iv) sont généralement effectuées sous agitation.

De même toutes les étapes (i) à (iv) sont habituellement réalisées entre 75 et 97 °C, de préférence entre 80 et 96 °C.

Selon un mode de réalisation de l'invention, que l'étape (ii) soit effectuée (en totalité ou en partie) ou ne soit pas effectuée avec de l'acide concentré, la température de fin de réaction est plus élevée que la température de début de réaction : ainsi on maintient la température au début de la réaction (par exemple au cours de l'étape (i) et d'une partie de l'étape (ii)) de préférence entre 75 et 90 °C, puis on augmente la témpérature, de préférence jusqu'à une valeur comprise entre 90 et 97 °C, valeur à laquelle elle est maintenue (par exemple au cours d'une partie de l'étape (ii) et au cours des étapes (iii) et (iv)) jusqu'à la fin de la réaction.

Selon un autre mode de réalisation de l'invention, par exemple (mais pas uniquement) lorsqu'une partie de l'étape (ii) n'est pas effectuée avec de l'acide concentré, l'ensemble des étapes (i) à (iv) peut être effectué à une température constante.

Dans le procédé selon l'invention, on obtient, à l'issue de l'étape (iv), éventuellement suivie d'un mûrissement, une bouillie de silice qui est ensuite séparée (séparation liquide-solide).

Cette séparation comporte habituellement une filtration (avec un lavage si nécessaire), effectuée au moyen de toute méthode convenable, par exemple au moyen d'un filtre à bande, d'un filtre sous vide ou, de préférence, d'un filtre presse.

En général, cette séparation comporte, après la filtration, un délitage, ledit délitage pouvant être alors effectué en présence d'au moins un composé de l'aluminium et, éventuellement, en présence d'un acide (dans ce dernier cas, le composé de l'aluminium et ledit acide sont avantageusement ajoutés de manière simultanée).

L'opération de délitage, qui peut être réalisée mécaniquement, par exemple par passage du gâteau de filtration dans un broyeur de type colloïdal ou à billes, permet notamment d'abaisser la viscosité de la suspension à sécher (en particulier à atomiser) ultérieurement.

Le composé de l'aluminium consiste, en général, en un aluminate de métal alcalin, notamment de potassium ou, de manière préférée, de sodium.

La suspension de silice précipitée ainsi récupérée (gâteau de filtration, en général délité) est ensuite séchée.

De préférence, dans le procédé de préparation conforme à l'invention, cette suspension doit présenter immédiatement avant son séchage un taux de matière sèche d'au plus 24 % en masse, en particulier d'au plus 23 % en masse, par exemple d'au plus 22 % en masse.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Lorsque le séchage est effectué à l'aide d'un atomiseur à buses, la silice précipitée susceptible d'être alors obtenue se présente habituellement sous forme de billes sensiblement sphériques.

A l'issue de ce séchage, on peut éventuellement procéder à une étape de broyage sur le produit récupéré ; la silice précipitée susceptible d'être alors obtenue se présente généralement sous forme d'une poudre.

Lorsque le séchage est effectué à l'aide d'un atomiseur à turbines, la silice précipitée susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en œuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice précipitée susceptible d'être alors obtenue par cette étape d'agglomération se présente généralement sous la forme de granulés.

La mise en œuvre du procédé de préparation selon l'invention, particulièrement lorsque l'acide concentré utilisé est de l'acide sulfurique concentré, permet notamment d'obtenir au cours dudit procédé (à l'issue de l'étape (iv)) une suspension plus concentrée en silice précipitée que celle obtenue par un procédé identique utilisant uniquement de l'acide dilué, et donc un gain en productivité en silice précipitée (pouvant atteindre par exemple au moins 10 à 40 %) en particulier à la réaction de précipitation (c'est-à-dire à l'issue de l'étape (iv)), tout en s'accompagnant de manière surprenante de l'obtention de silice précipitée ayant une bonne aptitude à la dispersion (dispersibilité) dans les compositions de polymère(s)(élastomère(s)) ; de manière plus générale, les silices précipitées obtenues par le procédé selon l'invention présentent préférentiellement des caractéristiques physico-chimiques et des propriétés comparables, notamment au niveau de leur distribution poreuse, de leur aptitude à la désagglomération et à la dispersion (dispersibilité) dans les compositions de polymère(s) (élastomère(s)) et/ou de leurs propriétés renforçantes, à celles des silices précipitées obtenues par un procédé identique utilisant uniquement de l'acide dilué.

De manière avantageuse, dans le même temps, notamment lorsque l'acide concentré utilisé est de l'acide sulfurique concentré, le procédé selon l'invention permet, par rapport à un procédé identique employant uniquement de l'acide dilué, un gain (pouvant atteindre par exemple au moins 20 à 60 %) sur la consommation d'énergie (sous forme de vapeur vive par exemple), en particulier à la réaction de précipitation (c'est-à-dire à l'issue de l'étape (iv)), du fait d'une diminution des quantités d'eau engagées et de l'exo-thermicité liée à l'utilisation d'acide concentré. En outre, l'utilisation d'acide concentré permet de restreindre (par exemple d'au moins 25 %) la quantité d'eau nécessaire à la réaction, notamment du fait de la diminution de la quantité d'eau utilisée pour la préparation de l'acide.

La silice précipitée obtenue par le procédé selon l'invention est de manière avantageuse hautement dispersible, c'est-à-dire qu'en particulier elle présente une aptitude à la désagglomération et à la dispersion (dispersibilité) dans une matrice polymérique très importante, notamment observable par microscopie électronique ou optique, sur coupes fines.

Un des paramètres de la silice précipitée obtenue par le procédé selon l'invention peut résider dans la distribution, ou répartition, de son volume poreux, et notamment dans la distribution du volume poreux qui est généré par les pores de diamètres inférieurs ou égaux à 400 Å. Ce dernier volume correspond au volume poreux utile des charges employées dans le renforcement des élastomères. En général, l'analyse des porogrammes montre que cette silice possède de préférence une distribution poreuse telle que le volume poreux généré par les pores dont le diamètre est compris entre 175 et 275Å (V2) représente au moins 50 %, en particulier au moins 60 %, du volume poreux généré par les pores de diamètres inférieurs ou égaux à 400 Å (V1).

Les volumes poreux et diamètres de pores sont mesurés par porosimétrie au mercure (Hg), à l'aide d'un porosimètre MICROMERITICS Autopore 9520, et sont calculés par la relation de WASHBURN avec un angle de contact théta égal à 130° et une tension superficielle gamma égale à 484 Dynes/cm.

L'état physique dans lequel se présente la silice précipitée préparée par le procédé selon l'invention peut être quelconque, c'est-à-dire qu'elle peut se présenter sous forme de microperles (billes sensiblement sphériques), de poudre ou de granulés.

Elle peut ainsi se présenter sous forme de billes sensiblement sphériques de taille moyenne d'au moins 80 $\mu$m, de préférence d'au moins 150 $\mu$m, en particulier comprise entre 150 et 270 $\mu$m ; cette taille moyenne est déterminée selon la norme NF X 11507 (décembre 1970) par tamisage à sec et détermination du diamètre correspondant à un refus cumulé de 50 %.

Elle peut se présenter sous forme de poudre de taille moyenne d'au moins 3 $\mu$m, en particulier d'au moins 10 $\mu$m, de préférence d'au moins 15 $\mu$m.

Elle peut se présenter sous forme de granulés (en général de forme sensiblement parallélépipédique) de taille d'au moins 1 mm, par exemple comprise entre 1 et 10 mm, notamment selon l'axe de leur plus grande longueur.

Lorsque la silice précipitée obtenue par le procédé selon l'invention se présente sous forme de granulés, elle possède de préférence une distribution poreuse telle que le volume poreux généré par les pores dont le diamètre est compris entre 175 et 275 Å (V2) représente au moins 60 % du volume poreux généré par les pores de diamètres inférieurs ou égaux à 400 Å (V1).

La silice précipitée préparée par le procédé selon l'invention possède de préférence une surface spécifique CTAB comprise entre 100 et 240 m²/g, en particulier entre 140 et 200 m²/g, par exemple entre 140 et 180 m²/g.

De même, de préférence, elle possède une surface spécifique BET comprise entre 100 et 240 m²/g. en particulier entre 140 et 200 m²/g, par exemple entre 150 et 190 m²/g.

La surface spécifique CTAB est la surface externe, pouvant être déterminée selon la méthode NF T 45007 (novembre 1987). La surface spécifique BET peut être mesurée selon la méthode de BRUNAUER - EMMETT - TELLER décrite dans "The Journal of the American Chemical Society", vol. 60, page 309 (1938) et correspondant à la norme NF T 45007 (novembre 1987).

L'aptitude à la dispersion (et à la désagglomération) des silices précipitées obtenues par le procédé selon l'invention peut être appréciée au moyen du test suivant, par une mesure granulométrique (par diffraction laser) effectuée sur une suspension de silice préalablement désagglomérée par ultra-sonification (rupture des objets de 0,1 à quelques dizaines de microns). La désagglomération sous ultra-sons est effectuée à l'aide d'un sonificateur VIBRACELL BIOBLOCK (750 W), équipé d'une sonde de diamètre 19 mm. La mesure granulométrique est effectuée par diffraction laser sur un granulomère SYMPATEC, en mettant en œuvre la théorie de Fraunhofer.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on la met en action pendant 5 minutes et 30 secondes à 80 % de sa puissance nominale (amplitude). On réalise ensuite la mesure granulométrique en introduisant dans la cuve du granulomètre un volume V (exprimé en ml) de la suspension homogénéisée nécessaire pour obtenir une densité optique de l'ordre de 20.

La valeur du diamètre médian $\emptyset_{50}$ que l'on obtient selon ce test est d'autant plus faible que la silice présente une aptitude à la désagglomération élevée.

Un facteur de désagglomération $F_D$ est donné par l'équation :

$$F_D = 10 \times V \,/\, \text{densité optique de la suspension mesurée par le granulomètre}$$

(cette densité optique est de l'ordre de 20).

Ce facteur de désagglomération $F_D$ est indicatif du taux de particules de taille inférieure à 0,1 $\mu$m qui ne sont pas détectées par le granulomètre. Ce facteur est d'autant plus élevé que la silice présente une aptitude à la désagglomération élevée.

En général, les silices précipitées préparées par le procédé selon l'invention possèdent un diamètre médian $\emptyset_{50}$, après désagglomération aux ultra-sons, inférieur à 5 $\mu$m, notamment inférieur à 4,5 $\mu$m, en particulier inférieur à 4 $\mu$m, par exemple inférieur à 3 $\mu$m.

Elles présentent habituellement un facteur de désagglomération aux ultra-sons $F_D$ supérieur à 5,5 ml, en particulier supérieur à 6,5 ml, par exemple supérieur à 10 ml.

Leur prise d'huile DOP peut être comprise entre 180 et 350 ml/100g, en particulier dans le cas où elles se présentent sous forme de poudre. La prise d'huile DOP peut être déterminée selon la norme ISO 787/5 en mettant en œuvre le dioctylphtalate.

La silice précipitée préparée par le procédé selon l'invention peut être utilisée dans de nombreuses applications.

Elle peut être employée par exemple comme support de catalyseur, comme absorbant de matières actives (en particulier support de liquides, notamment utilisés dans l'alimentation, tels que les vitamines (vitamine E), le chlorure de choline), dans des compositions de polymère(s), notamment d'élastomère(s), de silicone(s), comme agent viscosant, texturant ou anti-mottant, comme élément pour séparateurs de batteries, comme additif pour dentifrice, pour béton, pour papier.

Cependant elle trouve une application particulièrement intéressante dans le renforcement des polymères, naturels ou synthétiques.

Les compositions de polymère(s) dans lesquelles elle peut être employée, notamment à titre de charge renforçante, sont en général à base d'un ou plusieurs polymères ou copolymères, en particulier d'un ou plusieurs élastomères, présentant, de préférence, au moins une température de transition vitreuse comprise entre -150 et +300 °C, par exemple entre -150 et +20 °C.

A titre de polymères possibles, on peut mentionner notamment les polymères diéniques, en particulier les élastomères diéniques.

On peut citer, comme exemples non limitatifs d'articles finis à base desdites compositions de polymère(s), les semelles de chaussures, les pneumatiques, les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les tuyaux (flexibles), les gaines (notamment les gaines de câbles), les câbles, les supports de moteur, les bandes de convoyeur, les courroies de transmissions.

Les exemples suivants illustrent l'invention sans toutefois en limiter la portée.

EXEMPLE 1 (comparatif)

Dans un réacteur en acier inoxydable muni d'un système d'agitation par hélices et d'un chauffage par vapeur

6

vive dans le milieu réactionnel, on introduit :

- 637 litres d'eau,
- 14,1 kg de $Na_2SO_4$ (électrolyte),
- 362 litres de silicate de sodium aqueux, présentant un rapport pondéral $SiO_2/Na_2O$ égal à 3,5 et une densité à 20 °C égale à 1,230.

La concentration en silicate (exprimée en $SiO_2$) dans le pied de cuve est alors de 86 g/L. Le mélange est porté à une température de 83 °C tout en le maintenant sous agitation.

On y introduit alors 462 litres d'acide sulfurique dilué de densité à 20 °C égale à 1,050 (acide sulfurique de concentration massique égale à 7,7 %). L'acide dilué est introduit à un débit de 529 L/h pendant les 20 premières minutes de la réaction ; le débit est ensuite augmenté à 1056 L/h jusqu'à ce que le pH du milieu réactionnel atteigne une valeur (mesurée à sa température) égale à 8,0.

La température de réaction est de 83 °C pendant les 20 premières minutes de la réaction ; elle est ensuite portée de 83 °C à 92 °C en 15 minutes environ, puis maintenue à 92°C jusqu'à la fin de la réaction.

On introduit ensuite conjointement dans le milieu réactionnel 87,8 litres de silicate de sodium aqueux du type décrit ci-avant et 119 litres d'acide sulfurique, également du type ci-avant, cette introduction simultanée d'acide dilué et de silicate étant réalisée de manière telle que le pH du milieu réactionnel, pendant cette période d'introduction, soit constamment égal à $8,0 \pm 0,1$.

Après introduction de la totalité du silicate, on continue à introduire l'acide dilué, à un débit de 432 L/h, et ceci pendant 6 minutes.

Cette introduction complémentaire d'acide amène alors le pH du milieu réactionnel à une valeur égale à 4,8.

La durée totale de la réaction est de 60 minutes.

On obtient ainsi une bouillie de silice précipitée qui est filtrée et lavée au moyen d'un filtre presse de telle sorte qu'on récupère finalement un gâteau de silice dont l'humidité est de 77 % (donc un taux de matière sèche de 23 % en masse). Ce gâteau est ensuite fluidifié par action mécanique et chimique (ajout d'une quantité d'aluminate de sodium correspondant à un rapport pondéral $Al/SiO_2$ de 0,22 %). Après cette opération de délitage, on obtient un gâteau pompable, de pH égal à 6,9, qui est alors atomisé au moyen d'un atomiseur à buses.

Les caractéristiques de la silice obtenue (sous forme de billes sensiblement sphériques) sont les suivantes :

| Surface BET ($m^2$/g) | 158 |
|---|---|
| Surface CTAB ($m^2$/g) | 155 |
| $\varnothing_{50}$ ($\mu$m) * | 2,1 |
| $F_D$ (ml) * | 16,9 |
| V2/V1 (%) | 57 |
| * : après désagglomération aux ultra-sons | |

EXEMPLE 2 (comparatif)

Dans un réacteur en acier inoxydable muni d'un système d'agitation par hélices et d'un chauffage par vapeur vive dans le milieu réactionnel, on introduit :

- 700 litres d'eau,
- 15,5 kg de $Na_2SO_4$ (électrolyte),
- 402 litres de silicate de sodium aqueux, présentant un rapport pondéral $SiO_2/Na_2O$ égal à 3,5 et une densité à 20 °C égale à 1,230.

La concentration en silicate (exprimée en $SiO_2$) dans le pied de cuve est alors de 86 g/L. Le mélange est porté à une température de 83 °C tout en le maintenant sous agitation.

On y introduit alors 489 litres d'acide sulfurique dilué de densité à 20 °C égale à 1,050 (acide sulfurique de concentration massique égale à 7,7 %). L'acide dilué est introduit à un débit de 546 L/h pendant les 20 premières minutes de la réaction ; le débit est ensuite augmenté à 1228 L/h jusqu'à ce que le pH du milieu réactionnel atteigne une valeur de pH (mesurée à sa température) égale à 8,0.

La température de réaction est de 83 °C pendant les 20 premières minutes de la réaction ; elle est ensuite portée de 83 °C à 92 °C en 15 minutes environ, puis maintenue à 92 °C jusqu'à la fin de la réaction.

On introduit ensuite conjointement dans le milieu réactionnel 98,0 litres de silicate de sodium aqueux du type décrit ci-avant et 6,5 litres d'acide sulfurique concentré de densité à 20 °C égale à 1,83 (acide sulfurique de concentration massique égale à 95 %), cette introduction simultanée d'acide concentré et de silicate étant réalisée de manière telle que le pH du milieu réactionnel, pendant cette période d'introduction, soit constamment égal à 8,0 ± 0,1.

Après introduction de la totalité du silicate, on continue à introduire l'acide concentré, à un débit de 20 L/h, et ceci pendant 6 minutes.

Cette introduction complémentaire d'acide amène alors le pH du milieu réactionnel à une valeur égale à 4,8.

La durée totale de la réaction est de 60 minutes.

Par rapport à l'exemple 1, on constate :

- un gain en productivité à la réaction (concernant la concentration finale exprimée en $SiO_2$ du milieu réactionnel et prenant en compte la durée de la réaction) de 11 %,
- un gain en consommation d'eau à la réaction de 10 %,
- un gain en consommation d'énergie (sous forme de vapeur vive) à la réaction de 10 %.

On obtient ainsi une bouillie de silice précipitée qui est filtrée et lavée au moyen d'un filtre presse de telle sorte qu'on récupère finalement un gâteau de silice dont l'humidité est de 78 % (donc un taux de matière sèche de 22 % en masse). Ce gâteau est ensuite fluidifié par action mécanique et chimique (ajout d'une quantité d'aluminate de sodium correspondant à un rapport pondéral $Al/SiO_2$ de 0,21 %). Après cette opération de délitage, on obtient un gâteau pompable, de pH égal à 6,6, qui est alors atomisé au moyen d'un atomiseur à buses.

Les caractéristiques de la silice obtenue (sous forme de billes sensiblement sphériques) sont les suivantes :

| | |
|---|---|
| Surface BET ($m^2$/g) | 157 |
| Surface CTAB ($m^2$/g) | 155 |
| $\varnothing_{50}$ ($\mu$m) * | 2,5 |
| $F_D$ (ml) * | 19,3 |
| V2/V1 (%) | 60 |
| * : après désagglomération aux ultra-sons | |

EXEMPLE 3

Dans un réacteur en acier inoxydable muni d'un système d'agitation par hélices et d'un chauffage par vapeur vive dans le milieu réactionnel, on introduit :

- 860 litres d'eau,
- 19,0 kg de $Na_2SO_4$ (électrolyte),
- 492 litres de silicate de sodium aqueux, présentant un rapport pondéral $SiO_2/Na_2O$ égal à 3,5 et une densité à 20 °C égale à 1,230.

La concentration en silicate (exprimée en $SiO_2$) dans le pied de cuve est alors de 86 g/L. Le mélange est porté à une température de 82 °C tout en le maintenant sous agitation.

On y introduit alors 232 litres d'acide sulfurique dilué de densité à 20 °C égale à 1,050 (acide sulfurique de concentration massique égale à 7,7 %) pendant les 20 premières minutes de la réaction, puis 17 litres d'acide sulfurique concentré de densité à 20 °C égale à 1,83 (acide sulfurique de concentration massique égale à 95 %) jusqu'à ce que le pH du milieu réactionnel atteigne une valeur (mesurée à sa température) égale à 8,0.

La température de réaction est de 82 °C pendant les 20 premières minutes de la réaction ; elle est ensuite portée de 82 °C à 92 °C en 15 minutes environ, puis maintenue à 92 °C jusqu'à la fin de la réaction.

On introduit ensuite conjointement dans le milieu de réaction 120 litres de silicate de sodium aqueux du type décrit ci-avant et 7,6 litres d'acide sulfurique concentré, du type décrit ci-avant, cette introduction simultanée d'acide concentré et de silicate étant réalisée de manière telle que le pH du milieu réactionnel, pendant cette période d'introduction, soit constamment égal à 8,0 ± 0,1.

Après introduction de la totalité du silicate, on continue à introduire l'acide concentré, à un débit de 23 L/h, et ceci pendant 6 minutes.

Cette introduction complémentaire d'acide amène alors le pH du milieu à une valeur égale à 4,8.

La durée totale de la réaction est de 65 minutes.

Par rapport à l'exemple 1, on constate :

- un gain en productivité à la réaction (concernant la concentration finale exprimée en $SiO_2$ du milieu réactionnel et prenant en compte la durée de la réaction) de 25 %,
- un gain en consommation d'eau à la réaction de 26 %,
- un gain en consommation d'énergie (sous forme de vapeur vive) à la réaction de 26 %.

On obtient ainsi une bouillie de silice précipitée qui est filtrée et lavée au moyen d'un filtre presse de telle sorte qu'on récupère finalement un gâteau de silice dont l'humidité est de 77 % (donc un taux de matière sèche de 23 % en masse). Ce gâteau est ensuite fluidifié par action mécanique et chimique (ajout d'une quantité d'aluminate de sodium correspondant à un rapport pondéral Al/$SiO_2$ de 0,29 %). Après cette opération de délitage, on obtient un gâteau pompable, de pH égal à 6,6, qui est alors atomisé au moyen d'un atomiseur à buses.

Les caractéristiques de la silice obtenue (sous forme de billes sensiblement sphériques) sont les suivantes :

| | |
|---|---|
| Surface BET ($m^2$/g) | 163 |
| Surface CTAB ($m^2$/g) | 160 |
| $\varnothing_{50}$ ($\mu$m) * | 2,5 |
| $F_D$ (ml) * | 18,3 |
| V2/V1 (%) | 61 |
| * : après désagglomération aux ultra-sons | |

EXEMPLE 4

Dans un réacteur en acier inoxydable muni d'un système d'agitation par hélices et d'un chauffage par double enveloppe, on introduit :

- 86,4 litres d'eau,
- 0,77 kg de $Na_2SO_4$ (électrolyte),
- 44,2 litres de silicate de sodium aqueux, présentant un rapport pondéral $SiO_2$/$Na_2O$ égal à 3,5 et une densité à 20 °C égale à 1,230.

La concentration en silicate (exprimée en $SiO_2$) dans le pied de cuve est alors de 80 g/L. Le mélange est porté à une température de 87 °C tout en le maintenant sous agitation. La température est maintenue à cette valeur pendant l'ensemble de la réaction.

On y introduit alors 22,1 litres d'acide sulfurique dilué de densité à 20 °C égale à 1,050 (acide sulfurique de concentration massique égale à 7,7%) pendant les 20 premières minutes de la réaction, puis 1,46 litres d'acide sulfurique concentré de densité à 20 °C égale à 1,85 (acide sulfurique de concentration massique égale à 98 %) jusqu'à ce que le pH du milieu réactionnel atteigne une valeur (mesurée à sa température) égale à 8,0.

On introduit ensuite conjointement dans le milieu de réaction 10,7 litres de silicate de sodium aqueux du type décrit ci-avant et 0,69 litre d'acide sulfurique concentré, du type décrit ci-avant, cette introduction simultanée d'acide concentré et de silicate étant réalisée de manière telle que le pH du milieu réactionnel, pendant cette période d'introduction, soit constamment égal à 8,0 ± 0,1.

Après introduction de la totalité du silicate, on continue à introduire l'acide concentré, à un débit de 2,0 L/h, et ceci pendant 6 minutes.

Cette introduction complémentaire d'acide amène alors le pH du milieu réactionnel à une valeur égale à 4,8.

La durée totale de la réaction est de 60 minutes.

Par rapport à l'exemple 1, on constate :

- un gain en productivité à la réaction (concernant la concentration finale exprimée en $SiO_2$ du milieu réactionnel et prenant en compte la durée de la réaction) de 37 %,
- un gain en consommation d'eau à la réaction de 27 %,
- un gain en consommation d'énergie à la réaction de 32 %.

On obtient ainsi une bouillie de silice précipitée qui est filtrée et lavée au moyen d'un filtre sous vide de telle sorte qu'on récupère finalement un gâteau de silice dont l'humidité est de 85 % (donc un taux de matière sèche de 15 % en masse). Ce gâteau est ensuite fluidifié par action mécanique et chimique (ajout d'une quantité d'aluminate de sodium correspondant à un rapport pondéral Al/SiO$_2$ de 0,27 %). Après cette opération de délitage, on obtient un gâteau pompable, de pH égal à 6,8, qui est alors atomisé.

Les caractéristiques de la silice obtenue (sous forme de poudre) sont les suivantes :

| | |
|---|---|
| Surface BET (m$^2$/g) | 155 |
| Surface CTAB (m$^2$/g) | 164 |
| Ø$_{50}$ (μm) * | 2,8 |
| F$_D$ (ml) * | 12,6 |
| V2/V1 (%) | 58 |
| * : après désagglomération aux ultra-sons | |

**Revendications**

1. Procédé de préparation de silice précipitée, du type comprenant la réaction de précipitation entre un silicate et au moins un acide ce par quoi l'on obtient une suspension de silice précipitée, puis la séparation et le séchage de cette suspension, dans lequel :

   - on réalise la réaction de précipitation de la manière suivante :

      (i) on forme un pied de cuve initial comportant un silicate et un électrolyte, la concentration en silicate exprimée en SiO$_2$ dans ledit pied de cuve initial étant inférieure à 100 g/L et, de préférence, la concentration en électrolyte dans ledit pied de cuve initial étant inférieure à 19 g/L,
      (ii) on ajoute un acide audit pied de cuve jusqu'à l'obtention d'une valeur du pH du milieu réactionnel d'au moins 7,0, en particulier comprise entre 7 et 8,5,
      (iii) on ajoute au milieu réactionnel simultanément un acide et un silicate,
      (iv) on ajoute au milieu réactionnel un acide, en particulier jusqu'à l'obtention d'une valeur du pH du milieu réactionnel comprise entre 3,0 et 6,5,

   - on sèche une suspension, de préférence présentant un taux de matière sèche d'au plus 24 % en masse,

   procédé dans lequel l'acide utilisé dans les étapes (iii) et (iv) est un acide concentré choisi parmi l'acide sulfurique présentant une concentration d'au moins 80 % en masse, en particulier d'au moins 90 % en masse, l'acide acétique présentant une concentration d'au moins 90 % en masse, l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse, et
   **caractérisé en ce que** dans l'étape (ii) l'acide utilisé après l'atteinte du point de gel dans le milieu réactionnel est un acide concentré choisi parmi l'acide sulfurique présentant une concentration d'au moins 80 % en masse, en particulier d'au moins 90 % en masse, l'acide acétique présentant une concentration d'au moins 90 % en masse, l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

2. Procédé selon la revendication 1, **caractérisé en ce que** la concentration en silicate exprimée en SiO$_2$ dans ledit pied de cuve initial est d'au moins 80 g/L.

3. Procédé selon la revendication 1, **caractérisé en ce que** la concentration en silicate exprimée en SiO$_2$ dans ledit pied de cuve initial est inférieure à 80 g/L.

4. Procédé selon l'une des revendications 1 à 3, **caractérisé en ce que** ledit acide concentré est de l'acide sulfurique présentant une concentration d'au moins 80 % en masse, de préférence d'au moins 90 % en masse.

5. Procédé selon l'une des revendications 1 à 4, **caractérisé en ce que** ledit acide concentré est de l'acide sulfurique présentant une concentration comprise entre 90 et 98 % en masse.

**6.** Procédé selon l'une des revendications 1 à 5, **caractérisé en ce que** la séparation comporte une filtration et un délitage du gâteau issu de la filtration, ledit délitage étant de préférence effectué en présence d'au moins un composé de l'aluminium, en particulier un aluminate de métal alcalin.

**7.** Procédé selon l'une des revendications 1 à 6, **caractérisé en ce que** le séchage est effectué par atomisation.

**Patentansprüche**

**1.** Verfahren zur Herstellung von Fällungskieselsäure des Typs, der die Fällungsreaktion zwischen einem Silikat und mindestens einer Säure, wodurch man eine Suspension von Fällungskieselsäure erhält, und die anschließende Trennung und Trocknung dieser Suspension umfasst, wobei:

- man die Fällungsreaktion folgendermaßen durchführt:

(i) man bildet eine anfängliche Vorlage, die Silikat und einen Elektrolyt enthält, wobei die als $SiO_2$ ausgedrückte Konzentration an Silikat in der anfänglichen Vorlage weniger als 100 g/L beträgt und die Konzentration an Elektrolyt in der anfänglichen Vorlage weniger als 19 g/L beträgt,
(ii) man gibt eine Säure zu der Vorlage, bis man einen pH-Wert des Reaktionsmediums von mindestens 7,0, insbesondere zwischen 7 und 8,5, erhält,
(iii) man gibt gleichzeitig eine Säure und ein Silikat zu dem Reaktionsmedium,
(iv) man gibt eine Säure zu dem Reaktionsmedium, insbesondere bis man einen pH-Wert des Reaktionsmediums zwischen 3,0 und 6,5 erhält,

- man eine Suspension, vorzugsweise mit einem Feststoffgehalt von höchstens 24 Massen-%, trocknet,

wobei es sich bei der in den Schritten (iii) und (iv) verwendeten Säure um eine konzentrierte Säure handelt, die aus Schwefelsäure mit einer Konzentration von mindestens 80 Massen-%, insbesondere von mindestens 90 Massen-%, Essigsäure mit einer Konzentration von mindestens 90 Massen-%, Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von mindestens 30 Massen-% ausgewählt ist, und **dadurch gekennzeichnet, dass** es sich in Schritt (ii) bei der nach dem Erreichen des Gelpunkts in dem Reaktionsmedium verwendeten Säure um eine konzentrierte Säure handelt, die aus Schwefelsäure mit einer Konzentration von mindestens 80 Massen-%, insbesondere von mindestens 90 Massen-%, Essigsäure mit einer Konzentration von mindestens 90 Massen-%, Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von mindestens 30 Massen-% ausgewählt ist.

**2.** Verfahren nach Anspruch 1, **dadurch gekennzeichnet, dass** die als $SiO_2$ ausgedrückte Konzentration an Silikat in der anfänglichen Vorlage mindestens 80 g/L beträgt.

**3.** Verfahren nach Anspruch 1, **dadurch gekennzeichnet, dass** die als $SiO_2$ ausgedrückte Konzentration an Silikat in der anfänglichen Vorlage weniger als 80 g/L beträgt.

**4.** Verfahren nach einem der Ansprüche 1 bis 3, **dadurch gekennzeichnet, dass** es sich bei der konzentrierten Säure um Schwefelsäure mit einer Konzentration von mindestens 80 Massen-%, insbesondere mindestens 90 Massen-%, handelt.

**5.** Verfahren nach einem der Ansprüche 1 bis 4, **dadurch gekennzeichnet, dass** es sich bei der konzentrierten Säure um Schwefelsäure mit einer Konzentration zwischen 90 und 98 Massen-% handelt.

**6.** Verfahren nach einem der Ansprüche 1 bis 5, **dadurch gekennzeichnet, dass** die Trennung eine Filtration und eine Fragmentierung des sich aus der Filtration ergebenden Kuchens umfasst, wobei die Fragmentierung vorzugsweise in Gegenwart mindestens einer Aluminiumverbindung, insbesondere eines Alkalimetallaluminats, durchgeführt wird.

7. Verfahren nach einem der Ansprüche 1 bis 6, **dadurch gekennzeichnet, dass** die Trocknung durch Zerstäubung durchgeführt wird.

**Claims**

1. Process for preparing precipitated silica, of the type comprising the precipitation reaction between a silicate and at least one acid, whereby a suspension of precipitated silica is obtained, followed by the separation and drying of this suspension, wherein:

   - the precipitation reaction is carried out in the following way:

      (i) an initial stock comprising a silicate and an electrolyte is formed, the concentration of silicate expressed as $SiO_2$ in said initial stock being less than 100 g/l and, preferably, the concentration of electrolyte in said initial stock being less than 19 g/l,
      (ii) an acid is added to said stock until a pH value of the reaction medium of at least 7.0, in particular between 7 and 8.5, is obtained,
      (iii) an acid and a silicate are added simultaneously to the reaction medium,
      (iv) an acid is added to the reaction medium, in particular until a pH value of the reaction medium of between 3.0 and 6.5 is obtained,

   - a suspension, preferably having a solids content of at most 24% by weight, is dried,

   process wherein the acid used in steps (iii) and (iv) is a concentrated acid chosen from sulfuric acid having a concentration of at least 80% by weight, in particular of at least 90% by weight, acetic acid having a concentration of at least 90% by weight, formic acid having a concentration of at least 90% by weight, nitric acid having a concentration of at least 60% by weight, phosphoric acid having a concentration of at least 75% by weight, or hydrochloric acid having a concentration of at least 30% by weight, and **characterized in that**, in step (ii), the acid used after reaching the gel point in the reaction medium is a concentrated acid, preferably chosen from sulfuric acid having a concentration of at least 80% by weight, in particular of at least 90% by weight, acetic acid having a concentration of at least 90% by weight, formic acid having a concentration of at least 90% by weight, nitric acid having a concentration of at least 60% by weight, phosphoric acid having a concentration of at least 75% by weight, or hydrochloric acid having a concentration of at least 30% by weight.

2. Process according to Claim 1, **characterized in that** the concentration of silicate expressed as $SiO_2$ in said initial stock is at least 80 g/l.

3. Process according to Claim 1, **characterized in that** the concentration of silicate expressed as $SiO_2$ in said initial stock is less than 80 g/l.

4. Process according to one of Claims 1 to 3, **characterized in that** said concentrated acid is sulfuric acid having a concentration of at least 80% by weight, preferably of at least 90% by weight.

5. Process according to one of Claims 1 to 4, **characterized in that** said concentrated acid is sulfuric acid having a concentration of between 90% and 98% by weight.

6. Process according to one of Claims 1 to 5, **characterized in that** the separation comprises a filtration and a liquefaction of the cake resulting from the filtration, said liquefaction preferably being carried out in the presence of at least one aluminium compound, in particular an alkali metal aluminate.

7. Process according to one of Claims 1 to 6, **characterized in that** the drying is carried out by atomization.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 520862 B1

- WO 2010022544 A1

**Littérature non-brevet citée dans la description**

- **BRUNAUER ; EMMETT ; TELLER.** *The Journal of the American Chemical Society,* 1938, vol. 60, 309